# EUROPEAN PATENT SPECIFICATION

(11) **EP 0 538 780 B1**
(45) Date of publication and mention of the grant of the patent: **02.09.1998**
(21) Application number: 92117900.8
(22) Date of filing: 20.10.1992
(51) Int. Cl.: B62M 9/10

(54) **Chain shift aiding structure for a bicycle sprocket assembly**
Tragelement für eine Fahrradkettenschaltung
Elément de support de chaîne, pendant le changement de vitesse pour un ensemble de pignons pour bicyclette

(30) Priority: 21.10.1991 JP 272170/91
(43) Date of publication of application: 28.04.1993
(73) Proprietor: SHIMANO INC., Osaka (JP)
(72) Inventor: Nagano, Masashi, Izumi-shi, Osaka (JP)
(74) Representative: Säger, Manfred, Dipl.-Ing.

(56) References cited:
- EP-A- 0 008 851
- EP-A- 0 021 839
- EP-A- 0 144 984
- EP-A- 0 313 345
- EP-A- 0 396 091
- GB-A- 2 005 363
- US-A- 4 198 876

## Description

### BACKGROUND OF THE INVENTION

### FIELD OF THE INVENTION

The present invention relates to a multi-stage sprocket assembly for use with a driving chain of a bicycle, comprising at least two different diameter sprockets with different numbers of teeth, chain support means projecting from a side surface of the larger sprocket towards the smaller sprocket and including a contact portion defining a contact surface for contacting, without meshing, a lower surface of the upper trum of said running chain shifted from said smaller sprocket to said larger sprocket

### DESCRIPTION OF THE RELATED ART

In a multi-stage sprocket assembly of a bicycle having a derailleur, a chain is movable by a shifting force of the derailleur from a smaller diameter sprocket to a larger diameter sprocket. In a conventional sprocket assembly, a side surface of the chain contacts a side surface of the larger diameter sprocket, and the chain is supported by the larger diameter sprocket through a frictional force produced by the contact. With rotation of the larger diameter sprocket, the chain is raised to engage teeth of the larger diameter sprocket.

However, shifting of the chain in this manner requires a sufficient frictional force produced between the chain and the large sprocket to pick up the chain reliably with rotation of the sprocket. In other words, the derailleur must exert a strong force to press the chain upon the large sprocket.

When a heavy drive load occurs during a shifting operation, the chain may slip from the large sprocket. This makes it very difficult to pick up the chain with the large sprocket, or results in a delay of chain shift.

### DESCRIPTION OF THE PRIOR ART

A multi-stage sprocket assembly according to the preamble of the main claim is known (JP-A-63-2392). This known multi-stage sprocket assembly is for use with the driving chain of a bicycle. It comprises at least two different diameter sprockets with different numbers of teeth and the chain support means projecting from one side surface of the larger sprocket towards the smaller sprocket and includes a contact portion defining a contact surface for contacting - without meshing - a lower surface of the upper trum of said running chain shifted from said smaller sprocket to said larger sprocket. The chain support further is disposed for causing said contact surface to contact said chain engaging said smaller sprocket to pick up and lift said chain during a chain shift from a point below the perepherie of said larger sprocket to a point at which it can engage as least one of the teeth of the larger sprocket.

Also this known sprocket assembly is not reliable under a heavy drive load.

Another multi-stage sprocket assembly is known (EP-A-0313345). The two sprockets of the known assembly are assembled in the relation that the center between a pair of adjacent teeth at the larger diameter sprocket is positioned on a tangent extending from the center between a pair of adjacent teeth at the smaller diameter sprocket. In addition, the tangent extends along a moving path of a driving chain when shifted from the smaller diameter sprocket in engagement therewith to the larger diameter sprocket. A chain guide portion allowing the chain to deviate toward the larger diameter sprocket is recessed at the inside surface thereof facing the smaller diameter sprocket. Since the chain guide portion is recessed to an extent that the inner link plate of chain at the larger diameter sprocket side does not ride on the first tooth, when the inner link plate is positioned corresponding thereto, the outer link plate abuts against the termination of chain guide portion and the chain is restricted from moving toward the outside surface, thereby preventing the inner link plate from riding on the first tooth.

In this multi-stage sprocket assembly, the chain guide portion prevents the chain from riding on the first tooth of the larger diameter sprocket, but is has no substantially influence to the force excerted by the derailleur during the shifting operation.

A further multi-stage sprocket wheel device for a bicycle is known (EP-A-0396091.) In this device a chain support provided adjacent the first tooth for receiving a portion of the chain located on a side of the first tooth opposed to the small sprocket wheel when the chain disengages toward the small sprocket wheel from the first tooth and an adjacent tooth arranged forwardly of the first pitch center with respect to the direction of rotation.

With this device, the disengaged chain is received by the chain support and does not become displaced to a large extent toward the center of the sprocket wheels even when the chain disengages from a second tooth located forwardly of the first tooth with respect to the direction of rotation. The chain disengaged from the second tooth moves toward the small sprocket wheel in substantially the same manner as when disengaging from the first tooth Thereby the chain will correctly engage the teeth of the small sprocket wheel to assure a smoth change gear operation when the chain changes from the large diameter sprocket to the small diameter sprocket. If the chain changes from the smaller diameter sprocket to the larger diameter sprocket, this device can not assist the shifting operation.

Finally there is known a multi-stage sprocket assembly for a bicycle (US-A-4,198,876). The both outer sprockets comprise projections, which project from the front sides of these outer sprockets wheels respectively. These projections are at the axially outer most sides of the assembly. When the chain is coming off the sprocket it may mesh with the projection thereby relayably preventing the chain from falling between a hub or spoke and the outer most sprocket.

### SUMMARY OF THE INVENTION

An object of the present invention is to provide a sprocket for shifting a chain from a small sprocket to a large sprocket relatively easily, and that reliably even under a heavy drive load.

The above-mentioned object fulfilled according to the invention by the features of the main claim.

According to the invention, the shifting operation of the chain from the smaller sprocket to the larger sprocket is to fulfill within two shifting steps.

At first, the chain engages with the further projection to be shifted into a first level lying between the teeth of the smaller sprocket and the further projection of the support means. In a second step, the chain is shifted from this further projection of the support means to the teeth of the larger sprocket. In this way it is possible to realize a difference between the diameter of th smaller sprocket and the diameter of the larger sprocket which is larger than the difference between these diameters to realize according to the prior art.

To prevent the breakage of the chain when the chain tension is extremly high, the said contact surface is inclined towards an axis of said smaller sprocket as said contact surface extends towards said smaller sprocket.

Further and other objects, features and effects of the invention will become more apparent from the following more detailed description of the embodiments of the invention taken with reference to the accompanying drawings.

### BRIEF DESCRIPTION OF THE DRAWINGS

Fig. 1 is a side view of a principal portion of a bicycle having a two-stage sprocket assembly,
Figs. 2(a), 2(b), 2(c) and 2(d) are schematic views showing a way the chain support means picks up the chain with rotation of the sprocket assembly
Fig. 3 is a fragmentary side view of a principal portion of a sprocket assembly having a chain support means,
Fig. 4 is an overhead view of the portion shown in Fig. 3, and
Fig. 5 is a fragmentary view showing a modified chain support means with an inclined surface for containing the chain.

### DETAILED DESCRIPTION OF THE PREFERRED EMBODIMENTS

An embodiments of the present invention will be described hereinafter with reference to the drawings.

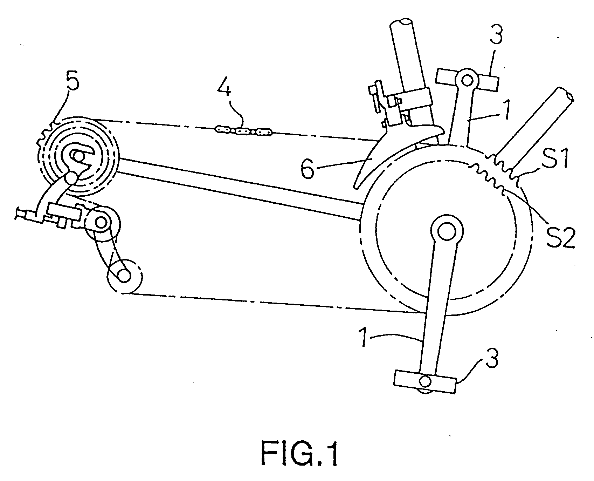

Fig. 1 shows a principal portion of a bicycle having a multi-stage change speed apparatus. The drawing shows crank arms 1 pivotally supporting pedals 3, a large sprocket S1, a small sprocket S2, a chain 4, a rear sprocket 5, and a front derailleur 6. As in a conventional drive mechanism of a bicycle, the pedals 3 supported by the crank arms 1 are turned to drive the sprockets S1 and S2, and the drive is transmitted through the chain 4 to the rear sprocket 5. The derailleur 6 is operable to shift the chain 4 from one front sprocket to the other.

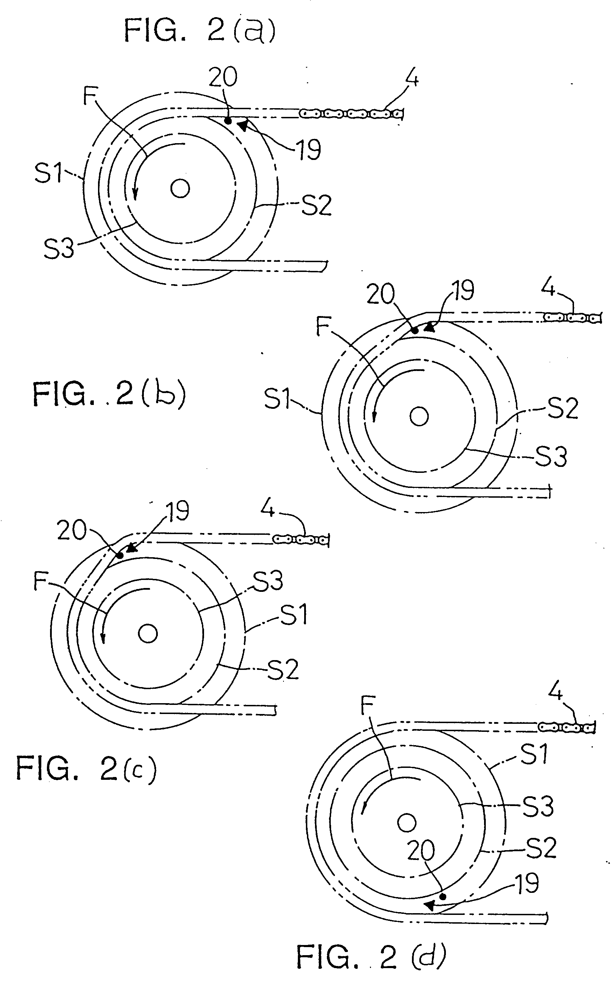

When the sprockets S1, S2 S3 are rotated with the derailleur 6 operated, the chain support projection 20 revolving with the large sprocket S1 moves to a position under the chain 4 and contacts an outer link plate 4a of the chain 4 as shown in Fig. 2(a).

With further rotation of the large sprocket S1, as shown in Fig. 2(b), the chain support projection 20 revolves further to pick up the chain 4 radially outwardly of the large sprocket S1. The chain shift is effected with the chain 4 supported by the chain support projection 20 even if the derailleur 6 exerts a relatively weak operating force at this time, and even if a chain tension slightly increases with an increase in drive load.

With further rotation of the large sprocket S1, as shown in Fig. 2(c), the shifting force of the derailleur 6 causes the chain 4 to engage the chain shift tooth 19. Once the chain 4 is meshed with the chain shift tooth 19, the chain 4 is drawn toward the large sprocket S1 by guiding action of the chain shift tooth 19. As a result, the chain 4 engages a tooth of the large sprocket S1. With further rotation of the large sprocket S1, as shown in Fig. 2(d), the chain 4 disengages from the chain shift tooth 19. This completes a shift of the chain 4 from the intermediate sprocket S2 to the large sprocket S1.

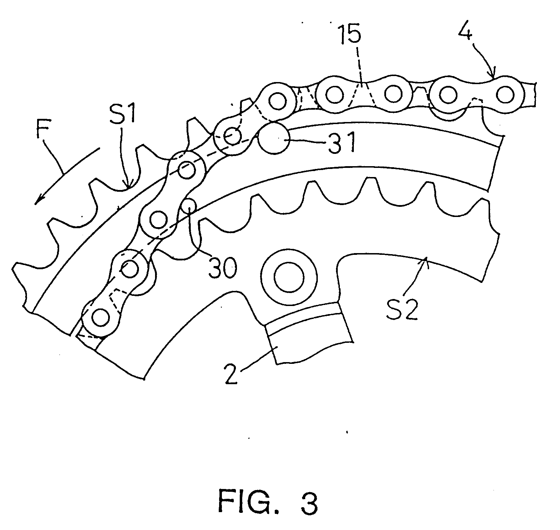

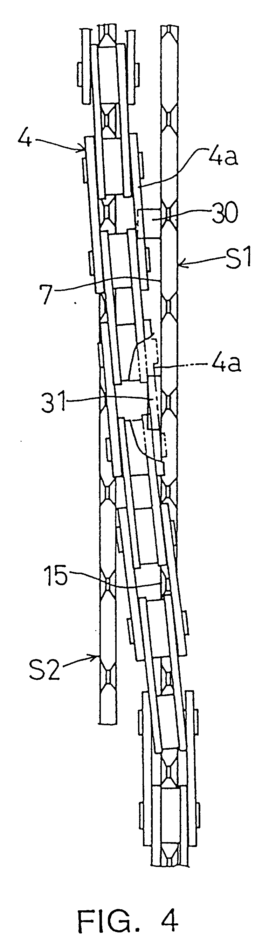

Figs. 3 and 4 show a further embodiment. In the illustrated three-stage sprocket assembly, a large sprocket S1 includes a first chain support projection 30 and a second chain support projection 31 formed on a side surface 7 thereof opposed to an intermediate sprocket S2. These projections 30 and 31 allow the chain 4 to be shifted from the intermediate sprocket S2 to the large sprocket S1 easily and reliably.

Specifically, the chain support projections 30 and 31 are in the form of steel pins projecting from the large sprocket S1.

Position of the first chain support projection 30 is determined according to a size and shape of the chain 4. As seen from Fig. 3, the first chain support projection 30 is displaced from the second chain support projection 31 toward a sprocket axis and in a rotating direction F of the sprockets as shown in Fig. 3.

When the sprockets S1 and S2 are rotated with the derailleur 6 operated, the first chain support projection 30 revolving with the large sprocket S1 moves to a position under the chain 4 and contacts an outer link plate 4a of the chain 4.

With further rotation of the large sprocket S1, the first chain support projection 30 revolves further to pick up the chain 4 radially outwardly of the large sprocket S1. At this time, the second chain support projection 31 moves under and engages the raised chain 4 without meshing with the chain 4. By the raising action of the chain support projections 30 and 31 and the shifting action of the derailleur 6, the chain 4 is meshed with a drive tooth 15 (Fig. 3) of the large sprocket S1 which contacts the chain 4 before any other teeth. In this way, the chain 4 is shifted from the intermediate sprocket S2 to the large sprocket S1 easily and reliably.

The second chain support projection 31 also is disposed in a position determined according to the size and shape of the chain 4. The second chain support projection 31 is displaced from the drive tooth 15 radially toward the axis of the large sprocket S1 and in the rotating direction F of the sprockets shown in Fig. 3.

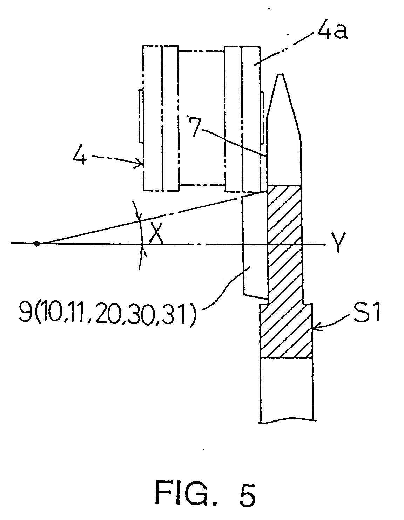

In all of the foregoing embodiments, each chain support projection 20, 30 or 31 may include a surface for contacting an outer link plate 4a of the chain 4, which surface has a suitable angle of inclination "x" as shown in Fig. 5. This angle may be determined to adjust a chain tension for causing the chain 4 to fall off the chain support projection. In Fig. 5, the angle "x" represents an inclination, with respect to an axis Y of the projection, of the surface of the chain support projection for engaging the chain 4.

Where a plurality of chain support projections and a plurality of chain shift teeth are provided, a shifting operation is carried out quickly with increased chances of the chain 4 engaging a chain support projection and chain shift tooth in the course of rotation of the sprockets. Nevertheless, only one chain support projection or chain shift tooth may be provided.

The chain support projections and chain shift teeth may be provided on the intermediate sprocket only or on both the large sprocket and intermediate sprocket.

## Claims

1. A multi-stage sprocket assembly for use with a driving chain (4) of a bicycle, comprising
at least two different diameter sprockets (S1, S2) with different numbers of teeth,
chain support means (30, 31) including:
a projection (31) projecting from a side surface (7) of the larger sprocket (S1) towards the smaller sprocket (S2) and
a contact portion defining a contact surface for contacting, without meshing, a lower surface of said running chain (4) shifted from said smaller sprocket (S2) to said larger sprocket (S1),
whereby said chain support means (30, 31) is disposed for causing said contact surface to contact said chain, engaging said smaller sprocket (S2), to pick up and to lift said chain (4) during a chain shift from a point below the periphery of said larger sprocket (S1) to a point at which it can engage at least one of the teeth of the larger sprocket (S1),
characterized in that
said chain support means (30, 31) further includes a further projection (30) projecting from said side surface (7) of said larger sprocket (S1) toward said smaller sprocket (S2), said further projection (30) being displaced from said contact surface toward a sprocket axis of said larger sprocket (S1) and in a rotating direction of said larger sprocket (S1).

2. A multi-stage sprocket assembly according to claim 1, characterized in that said contact surface is arched convexly.

3. A multi-stage assembly according to claim 1 or 2, characterized in that said contact surface is inclined towards an axis of said smaller sprocket (S2) as said contact surface extends towards said smaller sprocket (S2).

4. A multi-stage sprocket assembly according to one of claims 1 to 3, characterized in that said contact portion is hardened for increased wear resistance.

5. A multi-stage sprocket assembly according to one of claims 1 to 4, characterized in that the positions of said chain support means (30, 31) are determined such that outer link plates (4a) of said chain (4) contact said contact surface and such that said chain (4) contacting said contact surface engages reliably with a tooth of said larger sprocket (S1).

## Patentansprüche

1. Mehrstufige Kettenradbaugruppe zur Verwendung in Verbindung mit der Antriebskette (4) eines Fahrrads, welche folgendes aufweist:
mindestens zwei Kettenräder (S1, S2) mit unterschiedlichem Durchmesser und mit einer unterschiedlichen Anzahl Zähne,
eine Kettenabstützeinrichtung (30, 31) mit:
einem von einer Seitenfläche (7) des größeren Kettenrads (S1) zum kleineren Kettenrad (S2) hin vorspringenden Vorsprung (31) und
einem Kontaktbereich, welcher eine Berührungsfläche für den eingriffslosen Kontakt mit einer Unterseite der vom kleineren Kettenrad (S2) auf das größere Kettenrad (S1) umgeschalteten Laufkette (4),
wobei die Kettenabstützeinrichtung (30, 31) so angeordnet ist, daß sie die Berührungsfläche in Kontakt mit der Kette bringt und dabei den Eingriff mit dem kleineren Kettenrad (S2) herbeiführt, um während einer Umschaltung der Kette von einem Punkt unterhalb des Umfangs des größeren Kettenrads (S1) zu einem Punkt, an welchem sie in Eingriff mit mindestens einem der Zähne auf dem größeren Kettenrad (S1) kommen kann, die Kette (4) aufzunehmen und anzuheben,
dadurch gekennzeichnet, daß
die Kettenabstützeinrichtung (30, 31 außerdem einen weiteren Vorsprung (30) aufweist, der von der Seitenfläche (7) des größeren Kettenrads (S1) zum kleineren Kettenrad (S2) hin vorsteht, wobei er von der Berührungsfläche weg zu einer Kettenradachse des größeren Kettenrads (S1) hin und in Drehrichtung des größeren Kettenrads (S1) verlagert wird.

2. Mehrstufige Kettenradbaugruppe nach Anspruch 1, dadurch gekennzeichnet, daß die Berührungsfläche konvex gekrümmt ist.

3. Mehrstufige Kettenradbaugruppe nach Anspruch 1, dadurch gekennzeichnet, daß die Berührungsfläche zu einer Achse des kleineren Kettenrads (S2) hin geneigt ist, wobei sie zum kleineren Kettenrad (S2) hin verläuft.

4. Mehrstufige Kettenradbaugruppe nach einem der Ansprüche 1 bis 3, dadurch gekennzeichnet, daß zur Erzielung einer höheren Abriebfestigkeit der Kontaktbereich gehärtet ist.

5. Mehrstufige Kettenradbaugruppe nach einem der Ansprüche 1 bis 4, dadurch gekennzeichnet, daß die Positionen der Kettenabstützeinrichtung (9, 10, 11) in der Weise festgelegt sind, daß außenliegende Gelenkplatten (4a) der Kette (4) in Kontakt mit der Berührungsfläche stehen und daß die mit der Berührungsfläche in Kontakt stehende Kette (4) zuverlässig mit einem Zahn auf dem größeren Kettenrad (S1) in Eingriff steht.

## Revendications

1. Ensemble de roues dentées à plusieurs étages à utiliser avec une chaîne d'entraînement (4) d'une bicyclette, comprenant :
au moins deux roues dentées de diamètres différents (S1, S2) ayant des nombres de dents différents ;
un moyen de support de chaîne (30, 31) comprenant :
une protubérance (31) dépassant d'une surface latérale (7) de la plus grande roue dentée (S1) vers la plus petite roue dentée (S2) ; et
une partie de contact définissant une surface de contact pour venir en contact, sans s'engrener avec une surface inférieure de ladite chaîne en mouvement (4), déplacée de ladite plus petite roue dentée (S2) vers ladite plus grande roue dentée (S1),
dans lequel ledit moyen support dc chaîne (30, 31) est disposé de manière à solliciter ladite surface de contact à venir en contact avec ladite chaîne, en prise avec ladite plus petite roue dentée (S2), pour saisir et soulever ladite chaîne (4) pendant un déplacement de la chaîne depuis un point situé au-dessous de la périphérie de ladite plus grande roue dentée (S1) jusqu'à un point dans lequel elle peut venir en prise avec au moins une des dents de la plus grande roue dentée (S1),
caractérisé en ce que
ledit moyen support de chaîne (30, 31) comprend en outre une autre protubérance (30) dépassant de ladite surface latérale (7) de ladite plus grande roue dentée (S1) vers ladite plus petite roue dentée (S2), ladite autre protubérance (30) étant déplacée par rapport à ladite surface de contact vers un axe de roue dentée de ladite plus grande roue dentée (S1), et dans une direction de rotation de ladite plus grande roue dentée (S1).

2. Ensemble de roues dentées à plusieurs étages selon la revendication 1, caractérisé en ce que ladite surface de contact a une courbure convexe.

3. Ensemble à plusieurs étages selon l'une des revendications 1 ou 2, caractérisé en ce que ladite surface de contact est inclinée vers un axe de ladite plus petite roue dentée (S2) quand ladite surface de contact s'étend en direction de ladite plus petite roue dentée (S2).

4. Ensemble de roues dentées à plusieurs étages selon l'une des revendications l à 3, caractérisé en ce que ladite partie de contact est durcie pour augmenter sa résistance à l'usure.

5. Ensemble de roues dentées à plusieurs étages selon l'une des revendications l à 4, caractérisé en ce que les positions desdits moyens supports de chaîne (30, 31) sont déterminées de façon que les plaques extérieures (4a) des maillons de ladite chaîne (4) soient en contact avec ladite surface de contact, et que ladite chaîne (4), en contact avec ladite surface de contact, vienne en prise fiable avec une dent de ladite plus grande roue dentée (S1).
